# EUROPEAN PATENT SPECIFICATION

(11) **EP 2 489 463 B1**
(45) Date of publication and mention of the grant of the patent: **17.09.2014**
(21) Application number: 12155482.8
(22) Date of filing: 15.02.2012
(51) Int. Cl.: B23Q 1/76, B23Q 7/04

(54) **Steady rest**
Lünette
Support stable

(30) Priority: 15.02.2011 IT MO20110030
(43) Date of publication of application: 22.08.2012
(73) Proprietor: M.T. S.R.L., 47842 San Giovanni in Marignano (RN) (IT)
(72) Inventor: Marchetti, Terenzio, 47842 San Giovanni in Marignano (RN) (IT)
(74) Representative: Pandolfi, Paolo

(56) References cited:
- EP-A1- 2 210 699
- DE-A1- 3 625 218
- GB-A- 2 095 138

## Description

The invention relates to a steady rest mountable on a toolholder turret of a numerical controlled lathe to support, during a machining, a workpiece.

In particular, in turning machinings, the steady rests are used to support long workpieces to work against the tendency of the latter to flex during machining, this increasing the quality of the machining.

Steady rests are known comprising a grasping body from which pliers elements project, to grasp, in use, an external surface of the workpiece.

Such steady rests further comprise a supporting body that is fixable to a supporting plane of the toolholder turret.

The supporting body comprises a supporting plate to which the grasping body is fixed by screws.

EP-2210699 discloses a steady rest according to the preamble of claim 1.

In use, may happen that in certain lathes the space between the toolholder turret and fixed parts of these lathes, for example the frame, may be insufficient to enable the toolholder turret to rotate to perform the tool change without the pliers elements, protruding from the grasping body, knocking the frame of the lathe.

In other words, the overall dimensions of the pliers elements are such that the latter collides, in a rotation step of the toolholder turret, with fixed parts of the lathe in which the pliers elements are mounted.

An object of the invention is to improve the steady rests that are mountable on a toolholder turret of a numerical controlled lathe to support, during a machining, a workpiece.

A further object is to provide steady rests that are more flexible than known steady rests.

The invention provides a steady rest as disclosed in independent claim 1.

Owing to the invention it is possible to provide a steady rest that is more flexible, i.e. usable in a greater number of lathes, than known steady rests.

In fact, said moving means enables said pliers means to be positioned between a first position in which said pliers means can grasp the workpiece, and a second position in which said pliers means is disengaged from the workpiece. This enables the overall dimensions of said pliers means in said second position to be reduced so as not to hinder the rotation of said toolholder turret.
Figure 1 is a perspective view of a steady rest according to the invention;
Figure 2 is a partially exploded perspective view of the steady rest in Figure 1;
Figure 3 is a side view of the steady rest in Figure 1;
Figure 4 is a front view of the steady rest in Figure 1;
Figure 5 is a top view of the steady rest in Figure 1;
Figures 6 and 7 are respectively a side view and a perspective view of the steady rest in Figure 1 in a first position and mounted on a toolholder turret;
Figures 8 and 9 are respectively a side view and a perspective view of the steady rest in Figure 1 in a second position and mounted on a toolholder turret;
Figures 10 to 15 are oil hydraulic circuits showing schematically operating steps of the steady rest in Figure 1 in a first embodiment of the invention;
Figures 16 to 21 are further oil hydraulic circuits showing schematically operating steps of the steady rest in Figure 1 in a second embodiment of the invention.

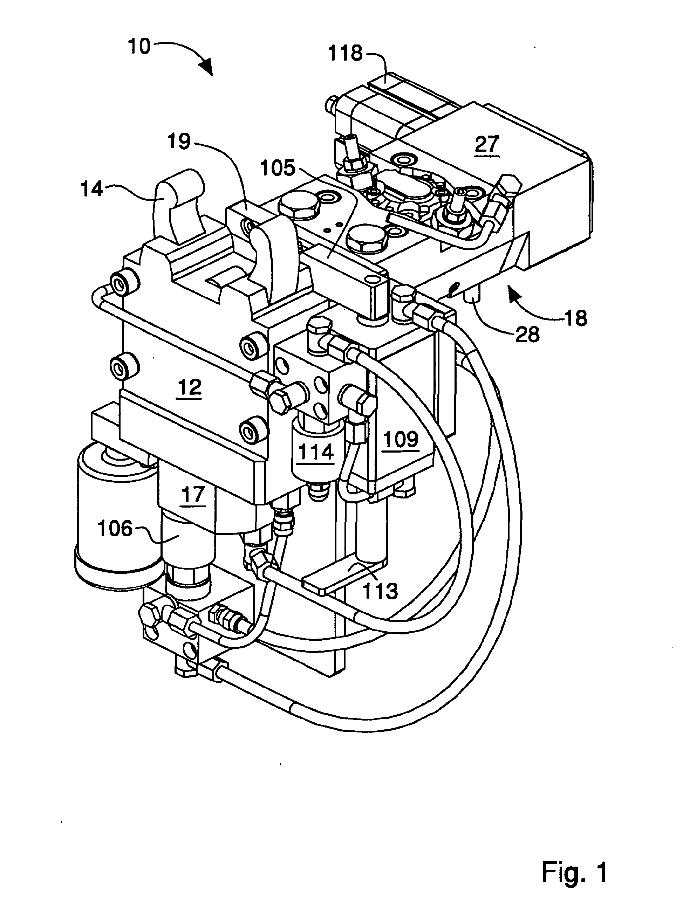

With reference to Figures 1 to 5, there is shown a steady rest 10 for supporting, during a machining, a workpiece, which is not shown.

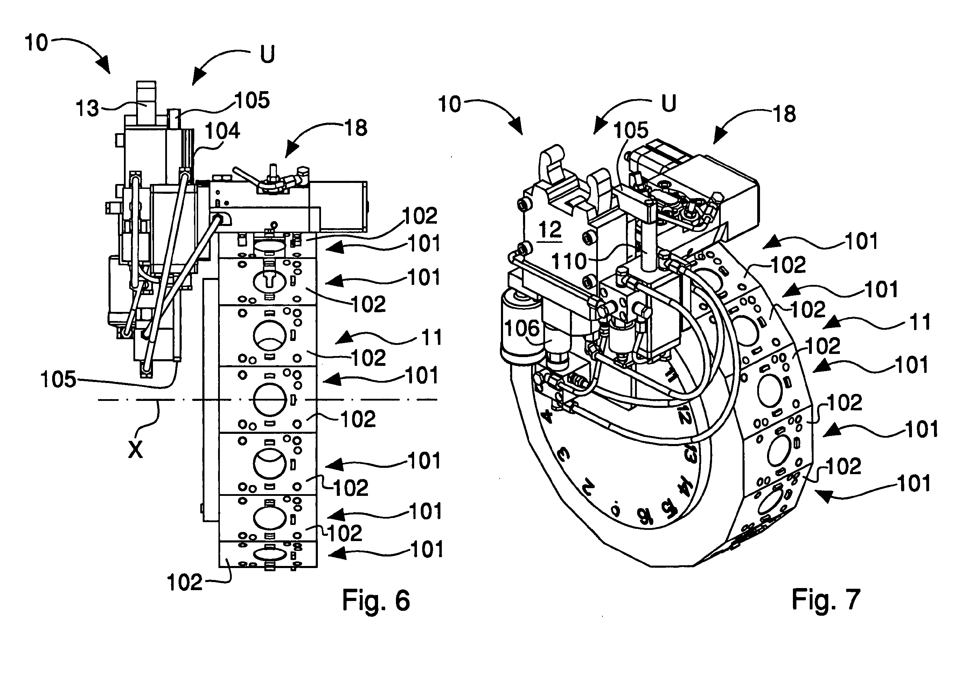

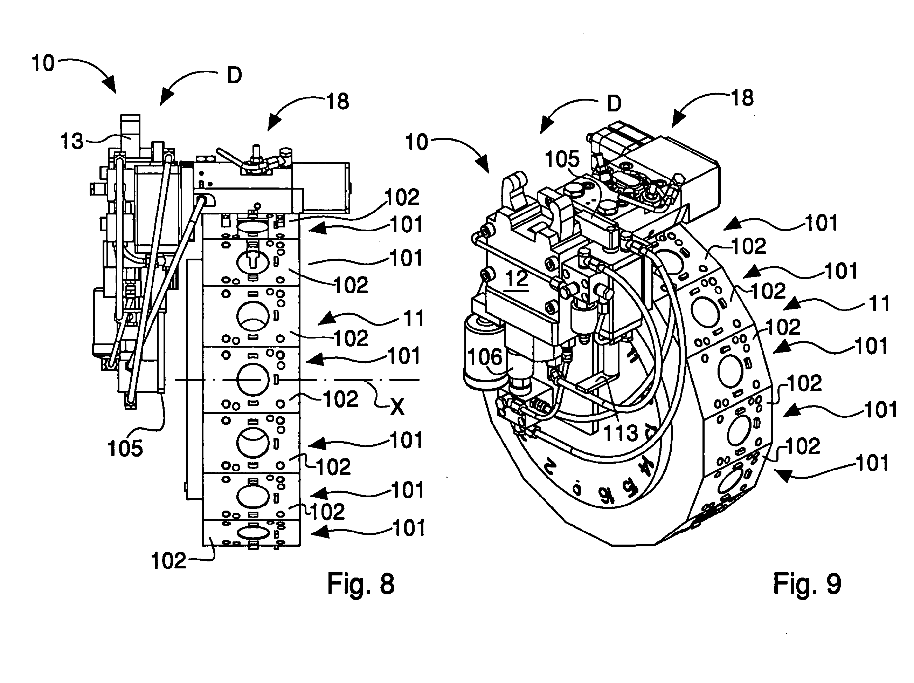

In particular, the steady rest 10 is mountable on a toolholder turret 11 (Figures 6, 7, 8 and 9) of a numerical controlled lathe, which is not shown.

The toolholder turret 11 is rotatable around a rotation axis X thereof and comprises, for example, sixteen positions 101, each provided with a supporting plane 102, on which the steady rest 10, or a motorised or static toolholder module, which is not shown, is fixable.

The steady rest 10 comprises a grasping body 12 from which protrude a first abutting element 13, a second abutting element 14 and a third abutting element 15 arranged for abutting, in use, on an external surface of the workpiece. The first abutting element 13, the second abutting element 14 and the third abutting element 15 are self-centring and act as grasping pliers for grasping the workpiece.

In particular, the third abutting element 15 is interposed between the first abutting element 13 and the second abutting element 14 and is positioned below the first abutting element 13 and the second abutting element 14. Also, the first abutting element 13, the second abutting element 14 and the third abutting element 15 each comprise, substantially at respective ends thereof, a roller 16, or bearing, to support the workpiece rotatingly during machining.

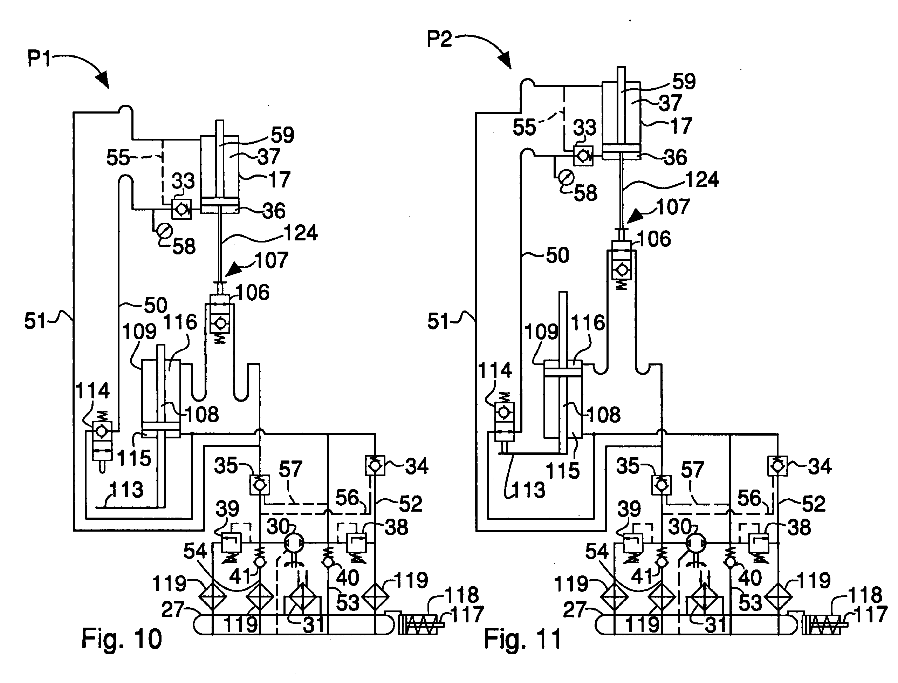

In particular, such rollers 16 are angularly spaced by 120°. The steady rest 10 further comprises a piston 59, shown schematically in Figures 10 to 21, that is slidable in a cylinder 17 fixed to the body 12.

The piston 59 is of the double-acting type and is connected stiffly to a rod 124 shown in Figures 10 to 15. Also, the piston 59 is drivable, as will be disclosed better below, by pressurised oil and is arranged for moving the first abutting element 13, the second abutting element 14 and the third abutting element 15 between a grasping position in which the first abutting element 13, the second abutting element 14 and the third abutting element 15 grasp the workpiece and a release position in which the first abutting element 13, the second abutting element 14 and the third abutting element 15 release the already machined workpiece and enable a user to position a new workpiece.

The steady rest 10 further comprises a supporting body 18 to support the grasping body 12.

The supporting body 18 is fixable, by screws 28, to a supporting plane 102 of the toolholder turret 11.

Also, the supporting body 18 comprises a supporting plate 19 on which a guide 103 is mounted, for example a linear guide. In the guide 103 a sliding block 104 is slidable to which a slide 105 is fixed.

The grasping body 12 is fixable to the slide 105 by further screws 20.

In an embodiment of the invention, which is not shown, the guide 103 is fixed to the slide 105 whereas the sliding block 104 is fixed to the supporting plate 19.

The steady rest 10 further comprises a mechanically controllable valve 106 fixed to the slide 105.

In use, the valve 106 is arranged, for reasons that will be disclosed below, for interacting with an end 107, protruding from the cylinder 17 of the rod 124 (Figures 10 to 15).

The steady rest 10 further comprises a further piston 108, shown schematically in Figures 10 to 21, which is slidable in a further cylinder 109 fixed to the supporting plate 19. The further piston 108 is of the double-acting through-stem type.

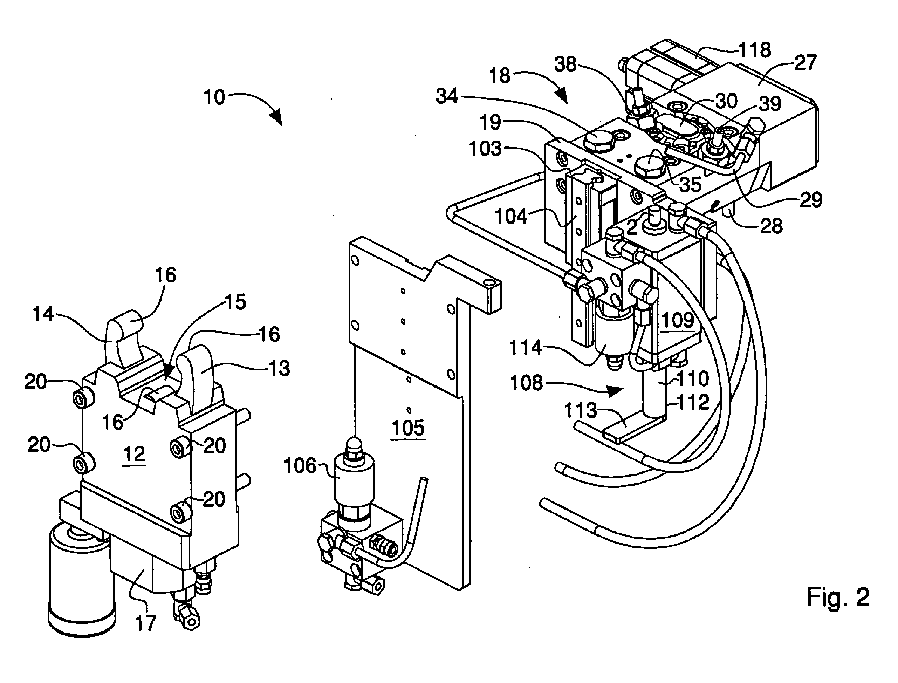

Also, the further piston 108 comprises a further stem 110 (Figures 2 and 7) fixed at an end 2 thereof to the slide 105.

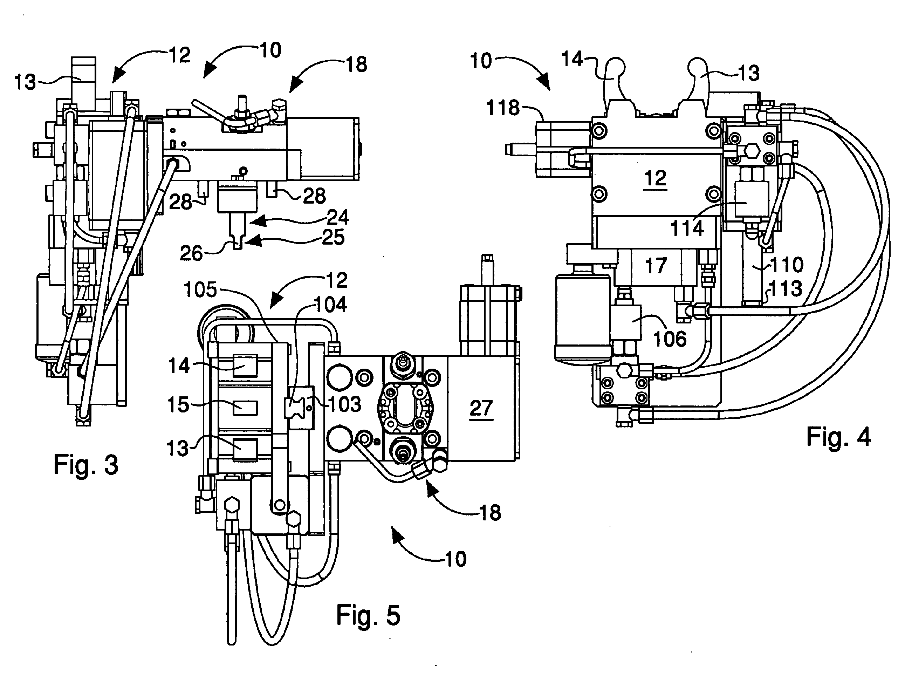

In this manner, in use, the further piston 108, which is driven, as will be disclosed better below, by pressurised oil, moves the slide 105, and thus the grasping body 12, between a raised position U (Figures 6 and 7) in which the first abutting element 13, the second abutting element 14 and the third abutting element 15 can grasp the workpiece, and a lowered position D (Figures 3 to 5, 8 and 9), in which the first abutting element 13, the second abutting element 14 and the third abutting element 15 cannot grasp the workpiece.

In particular, it should be noted how the further piston 108 moves the slide 105, and thus the grasping body 12, radially, and along a substantially rectilinear trajectory, with respect to the toolholder turret 11.

The further piston 108 further comprises a second end 112, which is free and opposite the first end 2.

An abutment 113 is fixed to the second end 112, the abutment 113 being arranged for interacting, for reasons that will be disclosed below, with a further valve 114.

The further valve 114, which is controllable mechanically, is fixed to the further cylinder 109 of the further piston 108.

The aforesaid supporting body 18 rotatingly supports a driving shaft 24, or driven shaft (Figure 3).

The driving shaft 24 comprises an end portion 25 provided with a male fitting 26 arranged for engaging with a corresponding female fitting, or drive, which is not shown, of a rotating driving shaft of the toolholder turret 11.

In use, when, following rotation of the toolholder turret 11 around the rotation axis X, the female fitting engages with the male fitting 26, the driving shaft 24 is rotated by the rotating driving shaft of the toolholder turret 11.

The steady rest 10 further comprises a hydraulic and reversible pump 30, received inside the supporting body 18. The pump 30 is connected to and rotated by the driving shaft 24.

Also, the pump 30 is connected to a first chamber 36 and to a second chamber 37 of the cylinder 17 by respectively a first supply/discharge conduit 50 or branch, and a second supply/discharge conduit 51 or branch (Figures 10 to 21). The first conduit 50 further connects the pump 30 to a further first chamber 115 of the further piston 108.

Also, in the first conduit 50, between the further first chamber 115 and the first chamber 36 the further valve 114 is positioned.

The second conduit 51 further connects the pump 30 to a further second chamber 116 of the further piston 108.

Also, in the second conduit 51, between the further second chamber 116 and the second chamber 37 the valve 106 is positioned.

The steady rest 10 further comprises a tank 27, for example a collecting tank, for containing the oil.

In particular, the tank 27 is fixed to the supporting body 18 on an opposite side of the supporting plate 19.

The steady rest 10 is further provided with another piston 117, shown schematically in Figures 10 to 21, of the single-acting type with spring return, housed slidably in another cylinder 118 connected to the tank 27.

In use, the other piston 117 acts as a compensator for compensating for the different volumes of the cylinder 17 and of the further cylinder 109 and for the heat expansion of the oil.

The steady rest 10 further comprises a heat exchanger 31, shown schematically in Figures 10 to 21, interposed between the tank 27 and the supporting body 18.

The heat exchanger 31 comprises a gap, which is not shown, inside which a cooling fluid can flow, in particular water, supplied by the toolholder turret 11 to the steady rest 10 via a suitable fitting.

In this manner, in use, the heat exchanger 31 cools both the oil in the tank 27 and the supporting body 18.

The aforesaid gap is connected to a conduit 29 supported and projecting from the supporting body 18.

The conduit 29 is arranged, in use, for conveying the cooling fluid to the first abutting element 13, the second abutting element 14 and the third abutting element 15 to cool the rollers 16.

The steady rest 10 further comprises a third conduit 52, shown schematically in Figures 10 to 21, arranged for conveying the oil between the first conduit 50 and the tank 27.

Also, the steady rest 10 comprises a fourth conduit 53 and a fifth conduit 54, shown schematically in Figures 10 to 21, for conveying the oil between the tank 27 and respectively the first conduit 50 and the second conduit 51.

The steady rest 10 further comprises a first valve 33, or safety valve, which is piloted and of one-way type, shown schematically in Figures 10 to 21, arranged for controlling and regulating a flow of oil between the pump 30 and the first chamber 36.

In particular, the first valve 33 is inserted into the first conduit 50 and is interposed between the first chamber 36 and the further valve 114.

The first valve 33 is received in the grasping body 12 and is arranged for preventing the first abutting element 13, the second abutting element 14 and the third abutting element from releasing the workpiece following, for example, oil leaks.

In particular, the first valve 33 is pilotable by a first signal 55 drawn by the second conduit 51 to enable the oil to flow from the first chamber 36 to the tank 27 and the pump 30 when the pressure of the oil in the second conduit 51 is greater than the pressure of the oil in the first conduit 50.

The steady rest 10 further comprises a second valve 34 supported by the supporting body 18.

The piloted and of one-way type second valve 34 is arranged for controlling and regulating a flow of oil from the first conduit 50 to the tank 27.

In particular, the second valve 34 is inserted between the first conduit 50 and the third conduit 52 and is pilotable by a second signal 56 drawn by the second conduit 51 to enable the oil to flow from the first chamber 36 and from the further first chamber 115 to the tank 27 when the pressure of the oil in the second conduit 51 is greater than the pressure of the oil in the first conduit 50.

The steady rest 10 further comprises a third valve 35 supported by the supporting body 18.

The third valve 35, which is piloted and of one-way type, is arranged for controlling and regulating a flow of oil between the pump 30, the second chamber 37 and the further second chamber 116.

In particular, the third valve 35 is inserted into the second conduit 51 and is pilotable by a third signal 57 drawn by the first conduit 50 to enable the oil to flow from the second chamber 37 and from the further second chamber 116 to the pump 30 when the pressure of the oil in the first conduit 50 is greater than the pressure of the oil in the second conduit 51.

The steady rest 10 further comprises a fourth valve 38 and a fifth valve 39 supported by the supporting body 18.

The fourth valve 38 and the fifth valve 39, or maximum pressure valves, are inserted respectively into the first conduit 50 and into the second conduit 51 between the pump 30 and the tank 27.

In particular, the fourth valve 38 and the fifth valve 39 are arranged for opening when the oil pressure reaches respectively a first and a second set threshold value, these threshold values being adjustable.

The steady rest 10 further comprises a sixth valve 40 and a seventh valve 41, shown schematically in Figures 10 to 21. The sixth valve 40 and the seventh valve 41, are one-way valves and are supported by the supporting body 18.

The sixth valve 40 and the seventh valve 41 are inserted respectively between the first conduit 50 and fourth conduit 53 and between the first conduit 50 and the fifth conduit 54.

The sixth valve 40 and the seventh valve 41 enable the oil to flow from the tank 27 respectively to the first conduit 50 and the second conduit 51.

The steady rest 10 can further comprise a fitting, which is not shown, protruding from the grasping body 12, to be connected to a source of compressed air.

The compressed air can thus be introduced into the grasping body 12 and exit from the latter in such a manner as to prevent extraneous bodies, such as, for example, machining chips, and the cooling fluid, from penetrating inside the grasping body 12.

The steady rest 10 is further provided with filters 119, shown schematically in Figures 10 to 21, positioned in the supporting body 18 and arranged for cleaning the oil from the impurities that are generated during operation.

In particular, such filters 119 are inserted into the second conduit 51, between the fifth valve 39 and the tank 27, into the fifth conduit 54 and into the third conduit 52.

Also, the steady rest 10 comprises a gauge 58, shown schematically in Figures 10 to 21, for checking the pressure of the oil in the first conduit 50.

Further, the steady rest 10 comprises an electric sensor, which is not shown, for detecting when the first abutting element 13, the second abutting element 14 and the third abutting element 15 are in the release position.

Also, the steady rest 10 comprises a further electric sensor, which is not shown, for detecting when the grasping body 12 is in the lowered position D.

In use, the toolholder turret 11 is rotatable only when the sensor and the further sensor have detected respectively the release position and the lowered position D.

The sensor and the further sensor, can, further, be associated with a wireless data transmission system, which is not shown, for connecting to a numerical control unit of the lathe.

This transmission system can comprise a transmitter, for example supported by the supporting body 18, and a receiver, for example positioned on the toolholder turret 11 or on a wiring cabinet of the lathe.

The transmitter and the receiver can respectively transmit/receive the data via, for example, Bluetooth technology.

The operation of the steady rest 10 with reference to the oil hydraulic circuit shown in Figures 10 to 15 is disclosed below.

Operation is disclosed from an operating condition in which the first abutting element 13, the second abutting element 14 and the third abutting element 15 are in the release position and the grasping body is in the lowered position D. In a first step P1, shown in Figure 10, the slide 105 is moved from the lowered position D to the raised position U by maintaining the first abutting element 13, the second abutting element 14 and the third abutting element 15 in the release position.

In the first step P1 the driving shaft 24 drives the pump 30 with a first rotation direction.

In this manner, the pump 30 draws oil from the further second chamber 116 via the suitably piloted third valve 35, and from the tank 27 via the seventh valve 41, and sends the oil to the further first chamber 115, the further valve 114 preventing the oil from flowing to the first chamber 36. Once the further first chamber 115 has been filled, the slide 105 is positioned, by the further piston 108, in the raised position U.

In a second step P2, shown in Figure 11, the slide 105 is maintained in the raised position U and the first abutting element 13, the second abutting element 14 and the third abutting element 15 are maintained in the grasping position. In the second step P2, the further first chamber 115 is pressurised, i.e. substantially full of oil, whilst the further second chamber 116 is discharged, i.e. substantially empty.

Also in the second step P2 the driving shaft 24 drives the pump 30 with the first rotation direction.

In this manner, the pump 30 draws oil from the second chamber 37 via the suitably piloted third valve 35, and from the tank 27 via the seventh valve 41, and sends the oil, not only to the further first chamber 115, thus maintaining the slide 105 in the raised position U, but also to the first chamber 36 via the first valve 33 and the further valve 114 piloted mechanically by the further piston 108 through the abutment 113.

The first chamber 36 fills up until the first abutting element 13, the second abutting element 14 and the third abutting element 15 are positioned in the grasping position, the slide 105 being maintained in the raised position U.

It should be noted that the grasping position of the first abutting element 13, of the second abutting element 14 and of the third abutting element 15 depends on the diameter of the workpiece to be grasped: the greater the diameter of the workpiece to be grasped, the less the first chamber 36 has to be filled to permit grasping, and vice versa.

Also, it should be noted that in the second step P2 the oil flow that enters the first chamber 36 is greater than the oil flow that exits the second chamber 37.

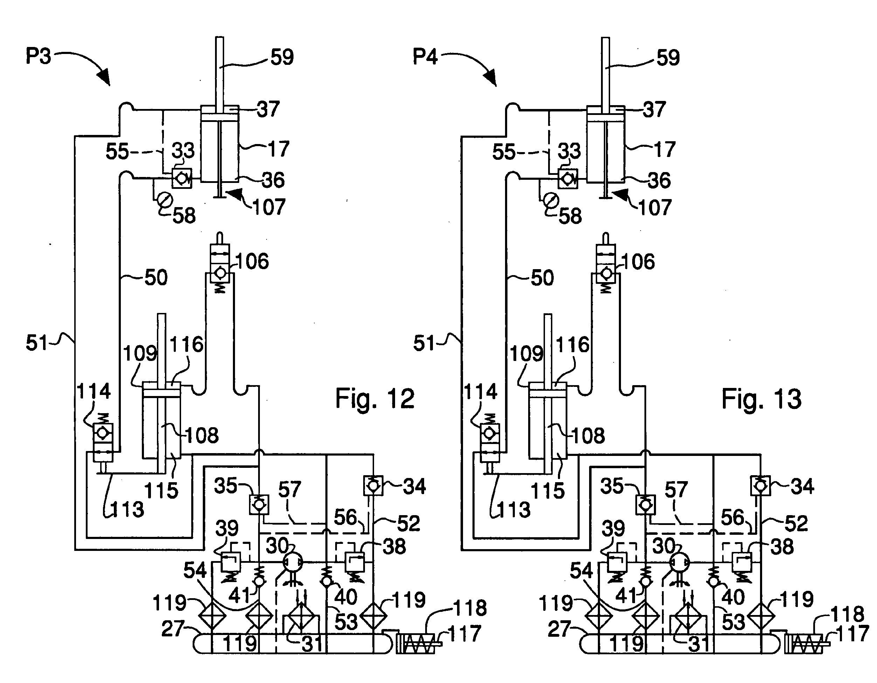

In a third step P3, shown in Figure 12, the slide 105 is maintained in the raised position U and the first abutting element 13, the second abutting element 14 and the third abutting element 15 are maintained in the grasping position to enable the lathe to perform the required machinings on the workpiece.

In the third step P3 the further first chamber 115 and the first chamber 36 are pressurised, whilst the further second chamber 116 and the second chamber 37 are discharged.

Also in the third step P3 the driving shaft 24 drives the pump 30 with the first rotation direction to compensate for possible oil leaks, due, for example, to components wear, which could compromise the tightening of the workpiece being machined.

In this manner, the pump 30 draws oil from the tank 27 via the seventh valve 41 and sends the oil both to the further first chamber 115, thus maintaining the slide 105 in the raised position U, and to the first chamber 36 via the first valve 33 and the further valve 114 piloted mechanically by the further piston 108 via the abutment 113, thereby maintaining the first abutting element 13, the second abutting element 14 and the third abutting element 15 in the grasping position.

As the second chamber 37 and the further camera 116 are discharged, and the first chamber 36 and the further first chamber 115 are pressurised, the pressure of the oil sent by the pump 30 increases, causing the fourth valve 38 to open, which enables the oil to discharge into the tank 27. In particular, the fourth valve 38 is opened once the aforesaid first threshold value is exceeded.

In an alternative operation embodiment the rotation speed of the driving shaft 24, and thus of the pump 30, is reduced, in the third step P3, such as to reduce energy dissipation. This speed must nevertheless be sufficient to compensate for possible oil leaks.

After machining of the workpiece has terminated, a fourth step P4 is provided, shown in Figure 13, comprising maintaining the slide 105 in the raised position U and positioning in the release position the first abutting element 13, the second abutting element 14 and the third abutting element 15.

In the fourth step P4 the driving shaft 24 drives the pump 30 with a second rotation direction opposite the first rotation direction.

In this manner, the pump 30 draws oil from the first chamber 36 via the suitably piloted first valve 33, and the further valve 114, and from the tank 27 via the sixth valve 40, and sends the oil to the second chamber 37 via the third valve 35, the valve 106 preventing the oil from flowing to the further second chamber 116.

The excess of oil, which is due to the different areas of the piston 59 facing the first chamber 36 and the second chamber 37, is sent by the pump 30 to the tank 27 via the suitably piloted second valve 34.

Once the release position has been reached, the first chamber 36 is discharged, i.e. substantially empty, whilst the second chamber 37 is pressurised, i.e. substantially full of oil.

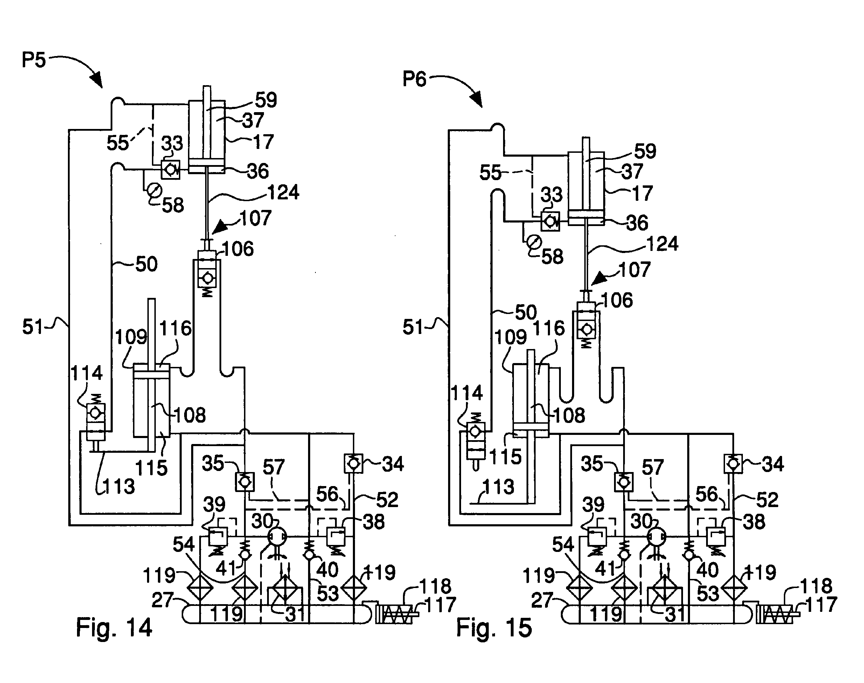

In a fifth step P5, shown in Figure 14, the slide 105 is moved from the raised position U to the lowered position D by maintaining the first abutting element 13, the second abutting element 14 and the third abutting element 15 in the release position.

In the fifth step P5 the second chamber 37 is pressurised, i.e. substantially full of oil, whilst the first chamber 36 is discharged, i.e. substantially empty.

Also in the fifth step P5 the driving shaft 24 drives the pump 30 with the second rotation direction.

In this manner, the pump 30 draws oil from the further first chamber 115 via the second suitably piloted valve 34, and from the tank 27 by the sixth valve 40, and sends the oil not only to the second chamber 37, thereby maintaining the first abutting element 13, the second abutting element 14 and the third abutting element 15 in the release position, but also to the further second chamber 116 via the valve 106 piloted mechanically by the piston 59.

The further second chamber 116 is filled until the slide 105 is positioned in the lowered position D, the first abutting element 13, the second abutting element 14 and the third abutting element 15 being maintained in the release position.

In a sixth step P6, shown in Figure 15, the slide 105 is maintained in the lowered position D and the first abutting element 13, the second abutting element 14 and the third abutting element 15 are maintained in the release position. In the sixth step P6 the further second chamber 116 and the second chamber 37 are pressurised, whilst the further first chamber 115 and the first chamber 36 are discharged.

Also in the sixth step P6 the driving shaft 24 drives the pump 30 with the second rotation direction to compensate for possible oil leaks, due, for example, to components wear.

In this manner, the pump 30 draws oil from the tank 27 via the sixth valve 40, and sends the oil not only to the second chamber 37, thus maintaining the first abutting element 13, the second abutting element 14 and the third abutting element 15 in the release position, but also to the further second chamber 116 via the valve 106 piloted mechanically by the piston 59, thus maintaining the slide 105 in the raised position U.

As the first chamber 36 and the further first chamber 115 are discharged, and the second chamber 37 and the further second chamber 116 are pressurised, the pressure of the oil sent by the pump 30 increases, causing the fifth valve 39 to open, which enables the oil to discharge into the tank 27. In particular, the fifth valve 39 opens once the aforesaid second threshold value has been exceeded.

Lastly, after a set time interval, the driving shaft 24 is stopped by the numerical control of the lathe.

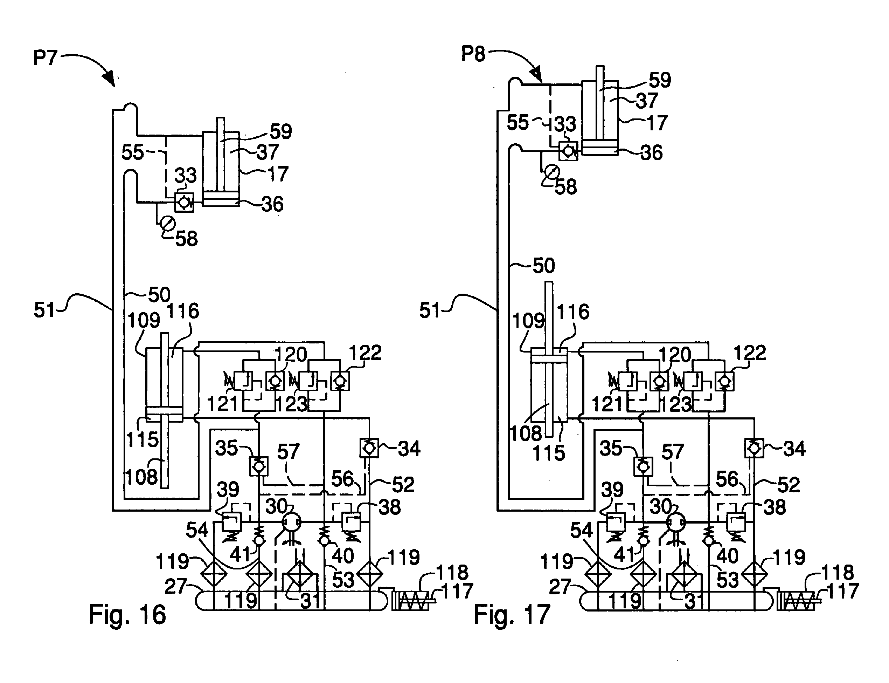

With reference to Figures 16 to 21 a variant of the steady rest 10 is shown schematically.

In this version, instead of the valve 106 an eighth one-way valve 120 and a ninth maximum pressure valve 121 are present whilst instead of the further valve 114 a tenth one-way valve 122 and an eleventh maximum pressure valve 123 are present. In particular, the ninth valve 121 and the eleventh valve 123 are arranged for opening when the pressure of the oil reaches respectively a further first and a further second set threshold value, these threshold values being adjustable.

Also, in this version, the rod 124 is not provided.

The operation of the steady rest 10 in the version that has just been disclosed will be disclosed below with reference to the oil hydraulic circuit shown in Figures 16 to 21.

Also in this case the operation is disclosed from an operating condition in which the first abutting element 13, the second abutting element 14 and the third abutting element 15 are in the release position and the grasping body is in the lowered position D.

In a further first step P7, shown in Figure 16, the slide 105 is moved from the lowered position D to the raised position U maintaining the first abutting element 13, the second abutting element 14 and the third abutting element 15 in the release position.

In the further first step P7 the driving shaft 24 drives the pump 30 with the first rotation direction.

In this manner, the pump 30 draws oil from the further second chamber 116 via the eighth valve 120 and the suitably piloted third valve 35, and from the tank 27 via the seventh valve 41, and sends the oil to the further first chamber 115, the tenth valve 122 and the eleventh valve 123, preventing the oil from flowing to the first chamber 36. Once the further first chamber 115 is filled, the slide 105 is positioned, by the further piston 108, in the raised position U.

In a further second step P8, shown in Figure 17, the slide 105 is maintained in the raised position U and the first abutting element 13, the second abutting element 14 and the third abutting element 15 are positioned in the grasping position.

In the further second step P8 the further first chamber 115 is pressurised, i.e. substantially full of oil, whilst the further second chamber 116 is discharged, i.e. substantially empty.

Also in the further second step P8 the driving shaft 24 drives the pump 30 with the first rotation direction.

As the further first chamber 115 is pressurised and the further second chamber 116 is discharged, the pressure of the oil sent by the pump 30 increases, causing the eleventh valve 123 to open, which enables the oil to flow via the first valve 33, into the first chamber 36. In particular, the eleventh valve 123 opens once the aforesaid further second threshold value is exceeded.

In this manner, the pump 30 draws oil from the second chamber 37 via the suitably piloted third valve 35, and from the tank 27 via the seventh valve 41, and sends the oil not only to the further first chamber 115, thus maintaining la slide 105 in the raised position U, but also to the first chamber 36 via the first valve 33 and the eleventh valve 123.

The first chamber 36 fills until it positions the first abutting element 13, the second abutting element 14 and the third abutting element 15 in the grasping position, the slide 105 being maintained in the raised position U.

It should be noted that the grasping position of the first abutting element 13, of the second abutting element 14 and of the third abutting element 15 depends on the diameter of the workpiece to be grasped: the greater the diameter of the workpiece to be grasped, the less the first chamber 36 will have to fill up to permit grasping and vice versa.

Also, it should be noted that in the further second step P8 the oil flow that enters the first chamber 36 is greater than the oil flow that exits the second chamber 37.

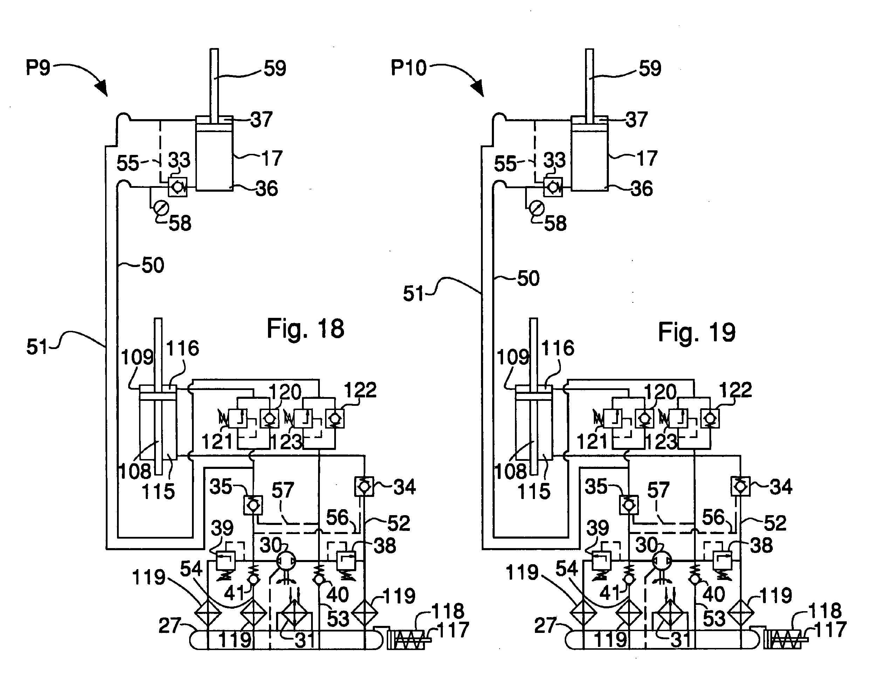

In a further third step P9, shown in Figure 18, the slide 105 is maintained in the raised position U and the first abutting element 13, the second abutting element 14 and the third abutting element 15 in the grasping position to enable the lathe to perform the required machinings on the workpiece.

In the further third step P9 the further first chamber 115 and the first chamber 36 are pressurised, whilst the further second chamber 116 and the second chamber 37 are discharged. Also in the further third step P9 the driving shaft 24 drives the pump 30 with the first rotation direction to compensate for possible oil leaks, due, for example, to components wear, which could comprise the tightening of the workpiece.

In this manner, the pump 30 draws oil from the tank 27 via the seventh valve 41, and sends the oil both to the further first chamber 115, thus maintaining the slide 105 in the raised position U, and to the first chamber 36 via the first valve 33 and the eleventh valve 123, thus maintaining the first abutting element 13, the second abutting element 14 and the third abutting element 15 in the grasping position. As the second chamber 37 and the further camera 116 are discharged, and the first chamber 36 and the further first chamber 115 are pressurised, the pressure of the oil sent by the pump 30 increases, causing the fourth valve 38 to open, which enables the oil to discharge into the tank 27. In particular, the fourth valve 38 opens once the aforesaid first threshold value is exceeded.

Once the workpiece has been machined, a further fourth step P10, shown in Figure 19, is provided, comprising maintaining the slide 105 in the raised position U and positioning the first abutting element 13, the second abutting element 14 and the third abutting element 15 in the release position. In the further fourth step P10 the driving shaft 24 drives the pump 30 with the second rotation direction.

In this manner, the pump 30 draws oil from the first chamber 36 via the suitably piloted first valve 33, and the tenth valve 122, and from the tank 27 via the sixth valve 40, and sends the oil to the second chamber 37, the eighth valve 120 and the ninth valve 121, preventing the oil from flowing to the further second chamber 116.

The excess of oil, which is due to the different areas of the piston 59 facing the first chamber 36 and the second chamber 37, is sent by the pump 30 to the tank 27 via the second suitably piloted valve 34.

Once the release position is reached, the first chamber 36 is discharged, i.e. substantially empty, whereas the second chamber 37 is pressurised, i.e. substantially full of oil.

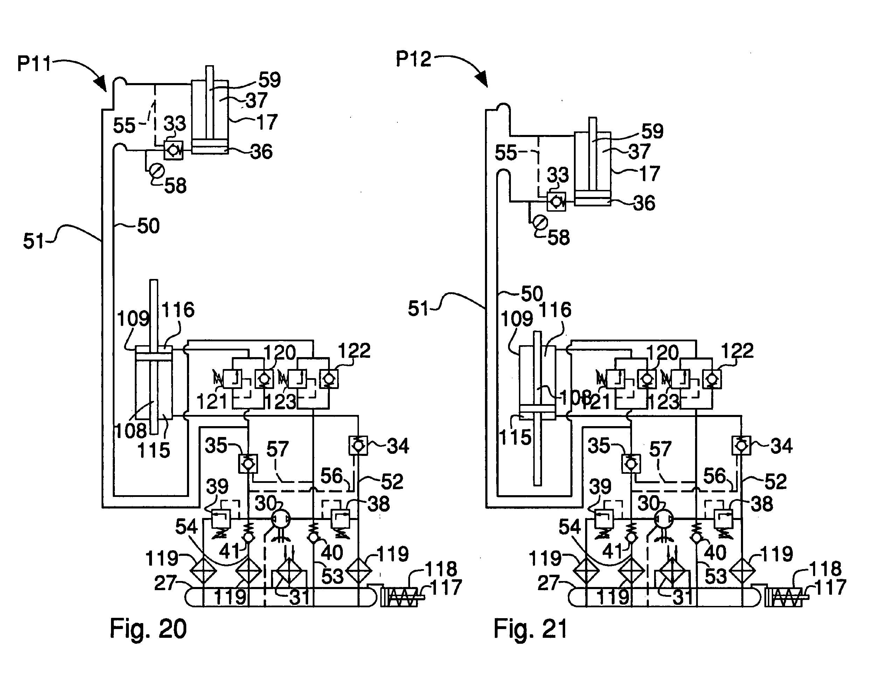

In a further fifth step P11, shown in Figure 20, the slide 105 is moved from the raised position U to the lowered position D, maintaining the first abutting element 13, the second abutting element 14 and the third abutting element 15 in the release position.

In the further fifth step P11 the second chamber 37 is pressurised, i.e. substantially full of oil, whereas the first chamber 36 is discharged, i.e. substantially empty. Also in the further fifth step P11 the driving shaft 24 drives the pump 30 with the second rotation direction.

As the second chamber 37 is pressurised and the first chamber 36 is discharged, the pressure of the oil sent by the pump 30 increases, causing the ninth valve 121 to open, which enables the oil to flow into the further second chamber 116. In particular, the ninth valve 121 is opened once the aforesaid further first threshold value has been exceeded.

In this manner, the pump 30 draws oil from the further first chamber 115 via the second suitably piloted valve 34, and from the tank 27 via la sixth valve 40, and sends the oil not only to the second chamber 37, thus maintaining the first abutting element 13, the second abutting element 14 and the third abutting element 15 in the release position, but also to the further second chamber 116 via the ninth valve 121.

The further second chamber 116 fills until the slide 105 is positioned in the lowered position D, the first abutting element 13, the second abutting element 14 and the third abutting element 15 being maintained in the release position.

In a further sixth step P12, shown in Figure 21, the slide 105 is maintained in the lowered position D and the first abutting element 13, the second abutting element 14 and the third abutting element 15 are maintained in the release position.

In the further sixth step P12 the further second chamber 116 and the second chamber 37 are pressurised, whereas the further first chamber 115 and the first chamber 36 are discharged.

Also in the sixth step P6 the driving shaft 24 drives the pump 30 with the second rotation direction to compensate for possible oil leaks, due, for example, to components wear.

In this manner, the pump 30 draws oil from the tank 27 via the sixth valve 40, and sends the oil not only to the second chamber 37, thus maintaining the first abutting element 13, the second abutting element 14 and the third abutting element 15 in the release position, but also to the further second chamber 116 via the ninth valve 121, thus maintaining the slide 105 in the raised position U.

As the first chamber 36 and the further first chamber 115 are discharged, and the second chamber 37 and the further second chamber 116 are pressurised, the pressure of the oil sent by the pump 30 increases, causing the fifth valve 39 to open, which enables the oil to discharge into the tank 27. In particular, the fifth valve 39 opens once the aforesaid second threshold value is exceeded.

Lastly, after a set time interval, the driving shaft 24 is stopped by the numerical control of the lathe.

In another version of the invention, which is not shown, adjusting means is provided for adjusting the stroke of the further piston 108. Such adjusting means comprises a dowel element that is insertible into the further cylinder 109 and acts as a stroke stop, or a spacer fixed to the further piston 108. In this another version, moreover, further adjusting means is provided for consequently adjusting the position of the further valve 114 in such a manner that, in an end-stroke position of the further piston 108 the latter interacts with the further valve 114.

It should be noted how the steady rest 10 is more flexible, i.e. is usable in a greater number of lathes, than are known steady rests.

In fact, the guide 103, the sliding block 104, the slide 105 and the further piston 108 enable the grasping body 12 and thus the first abutting element 13, the second abutting element 14 and the third abutting element 15, to be positioned between the raised position U in which the first abutting element 13, the second abutting element 14 and the third abutting element 15 can grasp the supporting body 18, and the lowered position D in which the first abutting element 13, the second abutting element 14 and the third abutting element 15 cannot grasp the workpiece, i.e. are disengaged from the workpiece.

This enables overall dimensions of the first abutting element 13, of the second abutting element 14 and of the third abutting element 15 to be reduced in the lowered position D so as not to hinder rotation of the toolholder turret 11 around the rotation axis X.

Also it should be noted how the aforesaid steady rest 10 enables the performance and versatility of the lathes in which it is engaged to be increased with respect to known steady rests.

In fact, the steady rest 10, driven as disclosed above by the pump 30 and by the driving shaft 24, does not require a toolholder turret to be set up to receive the steady rest 10, i.e. does not need to be provided with an integrated rotating distributor, but can be mounted on any motorised toolholder turret.

This enables an owner of a lathe with a toolholder turret that is not set up to receive a steady rest, i.e. the owner of a motorised toolholder turret, to nevertheless have a steady rest, this increasing the productivity and versatility of the previously purchased lathe.

Also, it should be noted how the steady rest 10 enables a user to adjust the force with which a workpiece is clamped, for example according to the type of machining to be performed on the workpiece or on the material constituting the latter.

In order to do so, it is sufficient to adjust appropriately the first threshold value of the fourth valve 38.

## Claims

1. Steady rest mountable on a toolholder turret (11) of a numerical controlled lathe for supporting a workpiece, said steady rest (10) comprising a grasping body (12), from which pliers means (13, 14, 15) protrudes to grasp said workpiece, and a supporting body (18), which is fixable to said toolholder turret (11) to support said grasping body (12), **characterised in that** it comprises moving means (103, 104, 105, 108, 109) for moving said grasping body (12) with respect to said supporting body (18) between a first position (U) in which said pliers means (13, 14, 15) can grasp said workpiece and a second position (D) in which said pliers means (13, 14, 15) cannot grasp said workpiece.

2. Steady rest according to claim 1, wherein said moving means (103, 104, 105, 108, 109) moves said grasping body (12) along a substantially rectilinear trajectory.

3. Steady rest according to claim 1, or 2, wherein said moving means (103, 104, 105, 108, 109) moves said grasping body (12) radially with respect to said toolholder turret (11).

4. Steady rest according to any preceding claim, wherein said moving means (103, 104, 105, 108, 109) comprises sliding block means (104) that is slidably connected to guide means (103), in particular linear guide means, said sliding block means (104) and said guide means (103) being interposed between said grasping body (12) and said supporting body (18).

5. Steady rest according to claim 4, wherein said guide means (103) is connected to said supporting body (18) and said sliding block means (104) is connected to said grasping body (12).

6. Steady rest according to claim 4, or 5, wherein said moving means (103, 104, 105, 108, 109) comprises slide means (105) to support said grasping body (12), said slide means (105) being interposed between said sliding block means (104) and said grasping body (12).

7. Steady rest according to any preceding claim, wherein said moving means (103, 104, 105, 108, 109) comprises piston means (108, 109) for moving said grasping body (12) between said second position (D) and said first position (U).

8. Steady rest according to claim 7, wherein said piston means (108, 109) comprises a piston (108) connected to said grasping body (12) and a cylinder (109), connected to said supporting body (18), to slidably support said piston (108).

9. Steady rest according to any preceding claim, and comprising further piston means (17, 59) for moving said pliers means (13, 14, 15) between a grasping position in which it grips said workpiece and a release position in which it releases said workpiece.

10. Steady rest according to claims 7 to 9, and comprising driving means (24, 30) acting on a driving fluid for driving said piston means (108, 109) and said further piston means (17, 59), said driving means being connectable to and drivable by, a drive of said toolholder turret (11).

11. Steady rest according to claim 10, and comprising controlling and regulating means (106, 114; 120, 121, 122, 123) for controlling and regulating a flow of said driving fluid towards/away from said piston means (108, 109) and towards/away from said further piston means (17, 59).

12. Steady rest according to claim 11, wherein said controlling and regulating means (106, 114; 120, 121, 122, 123) comprises valve means (106, 114) that is pilotable mechanically by said piston means (108, 109) and by said further piston means (17, 59).

13. Steady rest according to claim 11, wherein said controlling and regulating means (106, 114; 120, 121, 122, 123) comprises further valve means (120, 121, 122, 123) that is pilotable in function of predetermined pressure values of said driving fluid.

14. Steady rest according to claims 9 to 13, and comprising detecting means for detecting said second position (D) and/or said release position.

15. Steady rest according to claim 14, wherein said detecting means is associated with wireless data transmission means.

## Patentansprüche

1. Setzstock, der auf einem Werkzeughalter-Revolverkopf (11) einer numerisch gesteuerten Drehbank zum Lagern eines Werkstückes anbringbar ist, wobei der Setzstock (10) einen Greifkörper (12), von dem Zangenmittel (13, 14, 15) vorspringen, um das Werkstück zu greifen, und einen Lagerkörper (18) aufweist, der an dem Werkzeughalter-Revolverkopf (11) fixierbar ist, um den Greifkörper (12) zu lagern, **dadurch gekennzeichnet, dass** er Bewegungsmittel (103, 104, 105, 108, 109) zum Bewegen des Greifkörpers (12) bezüglich des Lagerkörpers (18) zwischen einer ersten Stellung (U), in der die Zangenmittel (13, 14, 15) das Werkstück greifen können, und einer zweiten Stellung (D) aufweist, in der die Zangenmittel (13, 14, 15) das Werkstück nicht greifen können.

2. Setzstock nach Anspruch 1, wobei die Bewegungsmittel (103, 104, 105, 108, 109) den Greifkörper (12) entlang einer im Wesentlichen geradlinigen Trajektorie bewegen.

3. Setzstock nach Anspruch 1 oder 2, wobei die Bewegungsmittel (103, 104, 105, 108, 109) den Greifkörper (12) radial bezüglich des Werkzeughalter-Revolverkopfes (11) bewegen.

4. Setzstock nach einem vorhergehenden Anspruch, wobei die Bewegungsmittel (103, 104, 105, 108, 109) Schiebeblockmittel (104) aufweisen, die mit Führungsmitteln (103), insbesondere Linearführungsmitteln, verschiebbar verbunden sind, wobei die Schiebeblockmittel (104) und die Führungsmittel (103) zwischen dem Greifkörper (12) und dem Lagerkörper (18) angeordnet sind.

5. Setzstock nach Anspruch 4, wobei die Führungsmittel (103) mit dem Lagerkörper (18) verbunden, und die Schiebeblockmittel (104) mit dem Greifkörper (12) verbunden sind.

6. Setzstock nach Anspruch 4 oder 5, wobei die Bewegungsmittel (103, 104, 105, 108, 109) Schiebemittel (105) aufweisen, um den Greifkörper (12) zu lagern, wobei die Schiebemittel (105) zwischen den Schiebeblockmitteln (104) und dem Greifkörper (12) angeordnet sind.

7. Setzstock nach einem vorhergehenden Anspruch, wobei die Bewegungsmittel (103, 104, 105, 108, 109) Kolbenmittel (108, 109) zum Bewegen des Greifkörpers (12) zwischen der zweiten Stellung (D) und der ersten Stellung (U) aufweisen.

8. Setzstock nach Anspruch 7, wobei die Kolbenmittel (108, 109) einen Kolben (108), der mit dem Greifkörper (12) verbunden ist, und einen Zylinder (109) aufweisen, der mit Lagerkörper (18) verbunden ist, um den Kolben (108) verschiebbar zu lagern.

9. Setzstock nach einem vorhergehenden Anspruch, und weiterhin mit Kolbenmitteln (17, 59) zum Bewegen der Zangenmittel (13, 14, 15) zwischen einer Greifstellung, in der sie das Werkstück greifen, und einer Freigabestellung, in der sie das Werkstück freigeben.

10. Setzstock nach den Ansprüchen 7 bis 9, und mit Antriebsmitteln (24, 30), die auf ein Antriebsfluid zum Antreiben der Kolbenmittel (108, 109) und der weiteren Kolbenmittel (17, 59) wirken, wobei die Antriebsmittel mit einem Antrieb des Werkzeughalter-Revolverkopfes (5) verbindbar und durch ihn antreibbar sind.

11. Setzstock nach Anspruch 10, und mit Steuer- und Regelmitteln (106, 114; 120, 121, 122, 123) zum Steuern und Regeln eines Flusses des Antriebsfluides zu den Kolbenmitteln (108, 109) oder von diesen weg und zu den weiteren Kolbenmitteln (17, 59) oder von diesen weg.

12. Setzstock nach Anspruch 11, wobei die Steuer- und Regelmittel (106, 114; 120, 121, 122, 123) Ventilmittel (106, 114) aufweisen, die durch die Kolbenmittel (108, 109) und durch die weiteren Kolbenmittel (17, 59) mechanisch ansteuerbar sind.

13. Setzstock nach Anspruch 11, wobei die Steuer- und Regelmittel (106, 114; 120, 121, 122, 123) weitere Ventilmittel (120, 121, 122, 123) aufweisen, die als Funktion vorbestimmter Druckwerte des Antriebsfluides ansteuerbar sind.

14. Setzstock nach den Ansprüchen 9 bis 13, und mit Detektiermitteln zum Detektieren der zweiten Stellung (D) und/oder der Freigabestellung.

15. Setzstock nach Anspruch 14, wobei die Detektiermittel mit drahtlosen Datenübertragungsmitteln verknüpft sind.

## Revendications

1. Support stable pouvant être monté sur une tourelle de porte-outil (11) d'un tour à commande numérique et destiné à porter une pièce, ledit support stable (10) comprenant un corps de saisie (12), à partir duquel des moyens à pinces (13, 14, 15) sont en saillie pour saisir ladite pièce, et un corps de support (18) qui peut être fixé sur ladite tourelle de porte-outil (11) afin de porter ledit corps de saisie (12), **caractérisé en ce qu'**il comprend des moyens de déplacement (103, 104, 105, 108, 109) pour déplacer ledit corps de saisie (12) par rapport audit corps de support (18) entre une première position (U) dans laquelle lesdits moyens à pinces (13, 14, 15) peuvent saisir ladite pièce et une deuxième position (D) dans laquelle lesdits moyens à pinces (13, 14, 15) ne peuvent pas saisir ladite pièce.

2. Support stable selon la revendication 1, dans lequel lesdits moyens de déplacement (103, 104, 105, 108, 109) déplacent ledit corps de saisie (12) le long d'une trajectoire sensiblement rectiligne.

3. Support stable selon la revendication 1 ou 2, dans lequel lesdits moyens de déplacement (103, 104, 105, 108, 109) déplacent ledit corps de saisie (12) de manière radiale par rapport à ladite tourelle de porte-outil (11).

4. Support stable selon une quelconque revendication précédente, dans lequel lesdits moyens de déplacement (103, 104, 105, 108, 109) comprennent un moyen à bloc coulissant (104) qui est relié de manière coulissante à un moyen de guidage (103), en particulier un moyen de guidage linéaire, ledit moyen à bloc coulissant (104) et ledit moyen de guidage (103) étant interposés entre ledit corps de saisie (12) et ledit corps de support (18).

5. Support stable selon la revendication 4, dans lequel ledit moyen de guidage (103) est relié audit corps de support (18) et ledit moyen à bloc coulissant (104) est relié audit corps de saisie (12).

6. Support stable selon la revendication 4 ou 5, dans lequel lesdits moyens de déplacement (103, 104, 105, 108, 109) comprennent un moyen de coulissement (105) pour porter ledit corps de saisie (12), ledit moyen de coulissement (105) étant interposé entre ledit moyen à bloc coulissant (104) et ledit corps de saisie (12).

7. Support stable selon une quelconque revendication précédente, dans lequel lesdits moyens de déplacement (103, 104, 105, 108, 109) comprennent des moyens à piston (108, 109) pour déplacer ledit corps de saisie (12) entre ladite deuxième position (D) et ladite première position (U).

8. Support stable selon la revendication 7, dans lequel lesdits moyens à piston (108, 109) comprennent un piston (108) relié audit corps de saisie (12) et un cylindre (109) relié audit corps de support (18) pour porter de manière coulissante ledit piston (108).

9. Support stable selon une quelconque revendication précédente, et comprenant des moyens à piston supplémentaires (17, 59) pour déplacer lesdits moyens à pinces (13, 14, 15) entre une position de saisie dans laquelle ils saisissent ladite pièce et une position de libération dans laquelle ils libèrent ladite pièce.

10. Support stable selon les revendications 7 à 9, et comprenant des moyens d'entraînement (24, 30) agissant sur un fluide d'entraînement pour entraîner lesdits moyens à piston (108, 109) et lesdits moyens à piston supplémentaires (17, 59), lesdits moyens d'entraînement pouvant être reliés à - et pouvant être entraînés par - un organe d'entraînement de ladite tourelle de porte-outil (11).

11. Support stable selon la revendication 10, et comprenant des moyens de commande et de régulation (106, 114 ; 120, 121, 122, 123) pour commander et réguler un écoulement dudit fluide d'entraînement en direction/en s'éloignant desdits moyens à piston (108, 109) et en direction/ en s'éloignant desdits moyens à piston supplémentaires (17, 59).

12. Support stable selon la revendication 11, dans lequel lesdits moyens de commande et de régulation (106, 114 ; 120, 121, 122, 123) comprennent des moyens à soupape (106, 114) qui peuvent être pilotés mécaniquement par lesdits moyens à piston (108, 109) et par lesdits moyens à piston supplémentaires (17, 59).

13. Support stable selon la revendication 11, dans lequel lesdits moyens de commande et de régulation (106, 114 ; 120, 121, 122, 123) comprennent des moyens à soupape supplémentaires (120, 121, 122, 123) qui peuvent être pilotés en fonction de valeurs de pression prédéterminées dudit fluide d'entraînement.

14. Support stable selon les revendications 9 à 13, et comprenant des moyens de détection pour détecter ladite deuxième position (D) et/ou ladite position de libération.

15. Support stable selon la revendication 14, dans lequel lesdits moyens de détection sont associés à des moyens de transmission de données sans fil.
